# EUROPÄISCHE PATENTSCHRIFT

(11) **EP 2 497 134 B1**
(45) Veröffentlichungstag und Bekanntmachung des Hinweises auf die Patenterteilung: **13.08.2014**
(21) Anmeldenummer: 10754944.6
(22) Anmeldetag: 21.09.2010
(51) Int. Cl.: H01M 2/20, H01M 2/30, H01M 2/24

(54) **VERFAHREN ZUR VERBINDUNG EINES BATTERIEPOLS AN EINER ERSTEN BATTERIEZELLE MIT EINEM BATTERIEPOL AN EINER ZWEITEN BATTERIEZELLE SOWIE BATTERIE MIT MITEINANDER VERBUNDENEN BATTERIEZELLEN UND BATTERIESYSTEM**
METHOD FOR CONNECTING A BATTERY TERMINAL ON A FIRST BATTERY CELL HAVING A BATTERY TERMINAL TO A SECOND BATTERY CELL, BATTERY HAVING CONNECTED BATTERY CELLS AND BATTERY SYSTEM
PROCÉDÉ POUR RELIER UN PÔLE DE BATTERIE AU NIVEAU D'UN PREMIER ÉLÉMENT DE BATTERIE À UN PÔLE DE BATTERIE AU NIVEAU D'UN SECOND ÉLÉMENT DE BATTERIE, BATTERIE CONSTITUÉE D'ÉLÉMENTS DE BATTERIE RELIÉS ENTRE EUX ET SYSTÈME DE BATTERIES

(30) Priorität: 06.11.2009 DE 102009046505
(43) Veröffentlichungstag der Anmeldung: 12.09.2012
(73) Patentinhaber: Samsung SDI Co., Ltd., Gyeonggi-do (KR); Robert Bosch GmbH, 70442 Stuttgart (DE)
(72) Erfinder: BUBECK, Conrad, 73728 Esslingen (DE)
(74) Vertreter: Bee, Joachim
(86) Internationale Anmeldenummer: PCT/EP2010/063858
(87) Internationale Veröffentlichungsnummer: WO 2011/054586

(56) Entgegenhaltungen:
- EP-A1- 0 772 251
- EP-A1- 1 779 962
- DE-A1- 19 513 774
- FR-A- 621 490
- FR-A- 662 975
- JP-A- 11 354 097
- US-A1- 2005 153 194
- US-A1- 2009 159 311

## Beschreibung

### Offenbarung der Erfindung

Die vorliegende Erfindung betrifft ein Verfahren zur Verbindung eines Batteriepols an einer ersten Batteriezelle mit einem Batteriepol an einer zweiten Batteriezelle sowie eine Batterie, welche mindestens zwei elektrisch leitfähig miteinander verbundene Batteriezellen umfasst. Außerdem betrifft die vorliegende Erfindung ein Batteriesystem, welches eine Mehrzahl von miteinander elektrisch kontaktierten Batteriezellen aufweist.

Eine Batterie, die eine oder mehrere galvanische Zellen umfasst, dient als elektrochemischer Energiespeicher und Energiewandler. Bei der Entladung der Batterie bzw. der jeweiligen Batteriezelle wird in der Batterie gespeicherte chemische Energie durch eine elektrochemische Redoxreaktion in elektrische Energie umgewandelt. Diese elektrische Energie kann somit je nach Bedarf von einem Nutzer angefordert werden.

Insofern die Batterie mehrere Batteriezellen umfasst, sind diese Batteriezellen in elektrisch leitfähiger Weise miteinander verbunden. Dies wird üblicherweise durch einen angeschraubten Zellverbinder realisiert, der allerdings aufgrund seiner großen Anzahl von Einzelteilen einen relativ hohen Übergangswiderstand aufweist. Bedingt durch Korrosion, insbesondere Oxidation, und aufgrund von elektrochemischen Spannungspotenzial-Unterschieden kommt es insbesondere bei verschraubten Zellverbindern über die Lebensdauer zu einer weiteren Erhöhung des Übergangswiderstandes. Durch mechanische Belastungen, wie z. B. durch Schwingungen beim Betrieb einer mittels Zellverbindern gekoppelten Anlage kann es zu Ablösungen bzw. Abstandsvergrößerungen zwischen den Kontaktstellen des Zellverbinders kommen, was sich ebenfalls widerstandserhöhend auswirkt.

Ein weiterer Nachteil des aus mehreren Teilen bestehenden Zellverbinders sind die damit verbundenen relativ hohen Fertigungs- und Montagekosten, bedingt durch eine Mehrzahl von Fertigungsschritten zur Herstellung der Einzelteile des Zellverbinders sowie der Montageschritte zum Zusammensetzen und zur Montage des Zellverbinders an die jeweiligen Batteriezellen.

Die US 2009/ 0159311 A1 offenbart ein Batteriesystem für Fahrzeuge mit trennbaren Verbindungen, bei denen Pole der Batteriezellen miteinander verbunden sind, nämlich über gebogene Verbinder.

Die EP 1 779 962 A1 lehrt eine direkte mechanische Verbindung von Polen einzelner Batteriezellen.

Aus der FR 662 975 A ist ein Terminal einer Batterie ersichtlich, welches zur weiteren Kontaktierung auskragt.

Weitere Verbindungen einzelner Pole von Batteriezellen oder Batterien sind aus den Dokumenten EP 0 772 251A; DE 195 13 774 A1; JP 11 354097 A; FR 621 490 A und US 2005/153194 A1 bekannt.

Der Erfindung liegt somit die Aufgabe zugrunde, ein Verfahren und eine Batterie bzw. ein Batteriesystem zur Verfügung zu stellen, die kostengünstig und unter Einsparung von Fertigungszeit produzierbar sind und dauerhaft einen relativ geringen Übergangswiderstand in der Zell- bzw. Batterieverbindung gewährleisten.

Diese Aufgabe wird durch das in Anspruch 1 angegebene Verfahren zur Verbindung eines Batteriepols an einer ersten Batteriezelle mit einem Batteriepol an einer zweiten Batteriezelle gemäß Anspruch 1 sowie durch die Batterie gemäß Anspruch 4 und das Batteriesystem gemäß Anspruch 8 erfindungsgemäß gelöst. Vorteilhafte Ausgestaltungen des Verfahrens zur Verbindung der Batteriepole sind in den Unteransprüchen 2 und 3 angegeben. Vorteilhafte Ausgestaltungen der erfindungsgemäßen Batterie sind in den Unteransprüchen 5 bis 7 angegeben.

Es wird erfindungsgemäß ein Verfahren zur Verbindung eines Batteriepols an einer ersten Batteriezelle mit einem Batteriepol an einer zweiten Batteriezelle zur Verfügung gestellt, bei dem der Batteriepol an der ersten Zelle mit dem Batteriepol an der zweiten Batteriezelle derart verbunden wird, dass ein elektrisch leitfähiger Kontakt zwischen den beiden Batteriepolen besteht, wobei der Batteriepol an der ersten Zelle mit dem Batteriepol an der zweiten Zelle unmittelbar kontaktiert wird. Dabei weisen die miteinander verbundenen Batteriepole, soweit sie aus der Batteriezelle herausragen, eine elektrisch isolierende Ummantelung auf. Erfindungsgemäß ist vorgesehen, dass ein Abschnitt der isolierenden Ummantelung im Bereich der unmittelbaren Kontaktierung der Batteriepole vor Durchführung des Kontaktierungsprozesses von den Batteriepolen abgetrennt wird und nach erfolgtem Kontaktierungsprozess wieder an den Batteriepolen fixiert wird. Das heißt, dass die Kontaktierung und Fixierung der beiden Batteriepole aneinander ohne Anordnung weiterer stromleitender Bauelemente zwischen den Batteriepolen erfolgt. Die Batteriepole kontaktieren sich somit direkt und selbst. Der Vorteil dieses Verfahrens liegt insbesondere darin, dass nur noch ein Fügevorgang zur Herstellung der elektrisch leitfähigen Verbindung außerhalb der Zelle notwendig ist, nämlich an der Verbindungsstelle der beiden Batteriepole. Es wird somit eine Verringerung des Übergangswiderstandes durch Reduktion der Übergangsstellen und Minderung der Verschleißanfälligkeit erreicht. Im Vergleich zu Ausführungsformen des Standes der Technik lässt sich die Fertigung und Montage eines Einzelteile aufweisenden extra Zellverbinders einsparen, bei dem z. B. mehrere Schraubverbindungen mit bestimmten Drehmomenten angezogen werden müssen.

Vorteilhafterweise werden die Batteriepole zur Herstellung des elektrisch leitfähigen Kontaktes stoffschlüssig miteinander verbunden. Insbesondere mittels Schweißung können die beiden Batteriepole aneinander geschweißt werden. Es sollte dabei Ultraschallschweißen oder eine andere Schweißart gewählt werden, mit der Kupfer bzw. geeignete Kupferlegierungen mit Aluminium bzw. geeigneten Aluminiumlegierungen verbunden werden können.

In alternativer Ausführung können die Batteriepole zur Herstellung des elektrisch leitfähigen Kontaktes kraft- und formschlüssig miteinander verbunden werden. Eine derartige kraft- und formschlüssige Verbindung lässt sich z. B. mittels Durchsetzfügen, was auch Druckfügen genannt wird, oder Clinchen oder Toxen realisieren. Alternativ ist auch die Verschraubung beider Batteriepole aneinander möglich. Den genannten Verbindungsverfahren ist gemeinsam, dass sie neben einer formschlüssig bedingten Fixierung der Batteriepole aneinander auch eine dauerhafte Kraft zum Andrücken der Batteriepole aneinander gewährleisten.

Zur Lösung der Aufgabe wird außerdem eine Batterie, welche mindestens zwei elektrisch leitfähig miteinander verbundene Batteriezellen umfasst, zur Verfügung gestellt, wobei an den beiden Batteriezellen jeweils ein Batteriepol angeordnet ist und ein Batteriepol an der ersten Batteriezelle mit einem Batteriepol an der zweiten Batteriezelle unmittelbar elektrisch leitfähig kontaktierend verbunden ist, wobei die miteinander verbundenen Batteriepole, soweit sie aus der Batteriezelle herausragen, eine elektrisch isolierende Ummantelung aufweisen. Erfindungsgemäß ist vorgesehen, dass die isolierende Ummantelung im Bereich der unmittelbaren Kontaktierung der Batteriepole einen vor Durchführung des Kontaktierungsprozesses von den Batteriepolen abtrennbaren und nach erfolgtem Kontaktierungsprozess wieder an den Batteriepolen fixierbaren Abschnitt umfasst.
Eine solche erfindungsgemäße Batterie ist somit gemäß des erfindungsgemäßen Verfahrens hergestellt. Mit der Batteriezelle ist üblicherweise eine galvanische Zelle gemeint, wobei eine Batterie eine Mehrzahl dieser galvanischen Zellen aufweist, die miteinander durch die Kontaktierung der Batteriepole elektrisch verbunden sind.

Es ist insbesondere vorgesehen, dass wenigstens einer der Batteriepole wenigstens ein sogenanntes Fahnenelement umfasst, dessen Endbereich mit dem anderen Batteriepol unmittelbar verbunden ist. Das heißt, dass ein Batteriepol an einer Batteriezelle ein Fahnenelement aufweist, welches als Ausleger oder Kragarm bis zum Batteriepol ab einer benachbarten Batteriezelle reicht, um diesen zu kontaktieren. Das Fahnenelement ist ein integraler Bestandteil des Batteriepols und dient zur Herstellung der elektrisch leitfähigen Kontaktierung mit dem anderen Batteriepol. In einer ersten, besonderen Ausgestaltung ist das Fahnenelement derart hinsichtlich seines Materials und seines Querschnittes ausgeführt, dass es manuell biegbar ist und somit unabhängig von der Ausrichtung einer Batteriezelle gebogen werden kann. Es ist somit in Richtung einer jeden Seite der Batteriezelle biegbar, um einen Batteriepol einer benachbarten Batteriezelle zu kontaktieren. In einer alternativen besonderen Ausgestaltung kann das Fahnenelement im Wesentlichen eine T-Form aufweisen, sodass es im an der Batteriezelle montierten Zustand zu beiden, sich gegenüberliegenden Seiten der Batteriezelle ragt und somit in einfacher Weise mit dem Batteriepol einer benachbart angeordneten weiteren Batteriezelle, egal auf welcher der beiden Seiten der ersten Batteriezelle sich diese weitere Batteriezelle befindet, erfindungsgemäß verbunden werden kann. Mit beiden besonderen Ausgestaltungen des Fahnenelements lässt sich der Fertigungsaufwand wesentlich minimieren, da bei der Fixierung eines Batteriepols mit Fahnenelement an der eigentlichen Batteriezelle nicht darauf geachtet werden muss, ob die jeweilige Batteriezelle an eine weitere Batteriezelle oder Batterie angeschlossen wird und auf welcher Seite diese benachbarte Batteriezelle oder Batterie angeordnet ist, da das spezielle Fahnenelement des Batteriepols derart eingerichtet ist, dass eine weitere Batteriezelle auf jeder Seite mit dem erfindungsgemäßen Fahnenelement angeschlossen werden kann.

Es ist dabei insbesondere vorgesehen, dass das Fahnenelement Bestandteil eines aus Kupfer oder einer geeigneten Kupferlegierung bestehenden Batteriepols ist.

An wenigstens einem und bevorzugt an beiden miteinander verbundenen Batteriepolen ist ein Gewinde zwecks Aufnahme einer Mutter zur Erzeugung einer Druckkraft auf ein Zellengehäuse angeordnet. Das heißt, dass der Schaft des jeweiligen Batteriepols ein Außengewinde aufweist, auf welches eine Mutter mit entsprechendem Innengewinde aufschraubbar oder aufgeschraubt ist, wobei bei Verdrehung der Mutter sich diese in Richtung einer Abdeckung der Batteriezelle, die Teil des Zellengehäuses ist, verschiebt und somit eine Kraft auf die Zellabdeckung der Zelle realisiert.

Zur Lösung der Aufgabe wird außerdem ein Batteriesystem zur Verfügung gestellt, welches eine Mehrzahl von Batterien umfasst, die jeweils mindestens eine Batteriezelle aufweisen, wobei jeweils wenigstens eine der Batteriezellen je Batterie wenigstens einen Batteriepol aufweist und ein Batteriepol einer ersten Batterie mit einem Batteriepol einer zweiten Batterie unmittelbar elektrisch kontaktierend verbunden ist, wobei die miteinander verbundenen Batteriepole, soweit sie aus der Batteriezelle herausragen, eine elektrisch isolierende Ummantelung aufweisen. Erfindungsgemäß ist vorgesehen, dass die isolierende Ummantelung im Bereich der unmittelbaren Kontaktierung der Batteriepole einen vor Durchführung des Kontaktierungsprozesses von den Batteriepolen abtrennbaren und nach erfolgtem Kontaktierungsprozess wieder an den Batteriepolen fixierbaren Abschnitt umfasst.

Dabei sind bevorzugt die Zellen der Batterien miteinander verbunden, die direkt nebeneinander befindlich angeordnet sind, um die Batteriemodule in Reihe zu schalten. Batterien werden somit erfindungsgemäß verbunden. Es lässt sich das erfindungsgemäße Verfahren also nicht nur zur Verbindung von Zellen einer Batterie untereinander verwenden, sondern auch zur Verbindung von mehreren Batterien miteinander.

Die Erfindung soll im Folgenden anhand der beiliegenden Zeichnungen erläutert werden.

Es zeigt dabei
Figur 1 eine Batterie mit schematischer Darstellung der Batteriezellen in Ansicht von der Seite,
Figur 2 miteinander verbundene Batteriepole in perspektivischer Darstellung,
Figur 3 einen Ausschnitt aus der Batterie in schematischer Darstellung in Ansicht von der Seite.

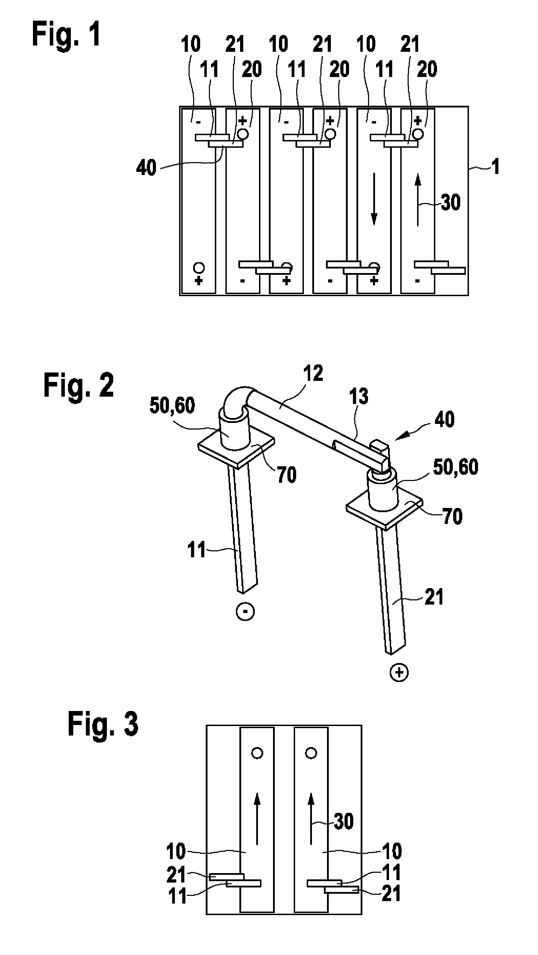

Aus Figur 1 ist ersichtlich, dass eine Batterie 1 mehrere Batteriezellen aufweist, wobei diese als erste Batteriezelle 10 und zweite Batteriezelle 20 abwechselnd nebeneinander derart angeordnet sind, dass ihre großflächigen Seitenteile im Wesentlichen planparallel zueinander positioniert sind. An den dargestellten Stirnseiten der Batteriezellen 10 und 20 ragen Batteriepole heraus, nämlich an der ersten Batteriezelle 10 der Batteriepol der ersten Batteriezelle 11 und einer zweiten Batteriezelle 20 der Batteriepol der zweiten Batteriezelle 21. Im Folgenden wird der Batteriepol der ersten Batteriezelle als der erste Batteriepol 11 und dem Batteriepol der zweiten Batteriezelle als der zweite Batteriepol 21 bezeichnet. Dabei ist ersichtlich, dass eine Verbindung zwischen der ersten Batteriezelle 10 und der zweiten Batteriezelle 20 immer vom Minus- zum Pluspol erfolgt. Dies entspricht der Ladungsträger-Bewegungsrichtung 30.

Der Minuspol der ersten Batteriezelle 10 kontaktiert den Pluspol der zweiten Batteriezelle 20 in einem Kontaktbereich 40 bzw. an einer Übergangsstelle zwischen dem ersten Batteriepol 11 und dem zweiten Batteriepol 21. Es lässt sich somit die in Figur 1 dargestellte Reihenschaltung der Batteriezellen realisieren. Es ist außerdem ersichtlich, dass zur Herstellung einer Reihenschaltung einer Vielzahl von Batteriezellen eine Vielzahl von Verbindungen zwischen den Batteriezellen geschaffen werden muss.

Durch die erfindungsgemäße Art und Weise der Verbindung der Batteriepole, wie sie in Figur 2 dargestellt ist, lässt sich der Herstellungs- und Montageaufwand wesentlich verringern. Wie in Figur 2 dargestellt ist der erste Batteriepol 11 über dessen als integraler Bestandteil ausgeführtes Fahnenelement direkt und unmittelbar, das heißt, ohne Zwischenschaltung weiterer Bauelemente, mit dem zweiten Batteriepol 21 verbunden. Das Fahnenelement 12 als Bestandteil des ersten Batteriepols 11 kreuzt sich mit dem zweiten Batteriepol 21 und liegt kontaktierend im Kontaktbereich bzw. an Übergangsstelle 40 an diesem an. In diesem Kontaktbereich 40 sind die beiden Batteriepole mittels einer stoffschlüssigen oder kraft- und formschlüssigen Verbindung derart miteinander verbunden, dass die Leitung elektrischen Stroms über diesen Kontaktbereich bzw. über die Übergangsstelle 40 mit geringem Übergangswiderstand realisiert werden kann. Bevorzugt ist dabei der erste Batteriepol 11 aus Kupfer oder einer geeigneten Kupferlegierung ausgeführt und der zweite Batteriepol 21 aus Aluminium oder einer geeigneten Aluminiumlegierung ausgeführt. An den Schäften der beiden Batteriepole 11 und 21 ist wie dargestellt jeweils ein Außengewinde 50 angeordnet, auf welches eine Mutter 60 geschraubt ist. An der Unterseite der jeweiligen Mutter 60 ist eine Andruckscheibe 70 angeordnet, die bei Verdrehung der Mutter 60 und daraus bedingtem translatorischen Versatz auf ein nicht dargestelltes Gehäuse einer Batteriezelle zum Zweck der Abdichtung des jeweiligen Gehäuseabschnittes drückt.

Jede der Batteriepole 11 und 21 wird dabei vorteilhafterweise aus einem Teil gefertigt. Es bietet sich dabei an, einen Rohling aus Kupfer oder einer Kupferlegierung bzw. Aluminium oder einer Aluminiumlegierung zu gießen, welcher anschließend in einem Umformvorgang wie z. B. Pressen oder Walzen in seine endgültige Form gebracht wird.

Die Fläche des Kontaktbereiches 40 verläuft im Wesentlichen senkrecht zu den Oberflächen der Batteriezellen 10 und 20, aus denen die Batteriepole 11 und 21 herausragen und die in den Figuren 1 und 3 als Flächen dargestellt sind. Bei Durchführung eines Fügeprozesses wie z. B. dem Ultraschallschweißen oder dem Durchsetzfügen mit Krafteinwirkung senkrecht zum Kontaktierungsbereich 40 und somit parallel zur Ebene der dargestellten Batteriezellenoberflächen lässt sich manuell oder automatisch eine entsprechend dimensionierte Gegenkraft zur Fügekraft auf den Batteriepol richten, auf den der jeweils andere Batteriepol Fügungskraft bedingt drückt.

Die unteren Enden der Batteriepole 11 und 21 weisen plane Abschnitte auf, um eine großflächige Auflage beim Fügeprozess zur Verbindung des Batteriepols mit der jeweiligen Batteriezelle zu gewährleisten. Die Batteriepole 11 und 21 können derart dimensioniert sein, dass sie im Bereich der senkrechten Schafte z. B. einen Durchmesser von 7-10 mm, vorzugsweise 8 mm aufweisen. Das heißt, dass das Gewinde 50, welches zur Befestigung der Mutter 60 dient, ein Gewinde der Größe M8 sein kann. Das Fahnenelement 12 wiederum kann einen Durchmesser von 5-6 mm aufweisen, wodurch ein ausreichender Querschnitt für den Energietransport gewährleistet ist. Insofern das Fahnenelement 12 keinen zu scharfen Biegeradius aufweist, lässt sich die Mutter 60 am ersten Batteriepol 11 über das Fahnenelement 12 schieben und auf das Gewinde 60 schrauben.

Das Fahnenelement 12 bzw. der gesamte erste Batteriepol 11 ist dabei wie bereits erwähnt vorteilhafterweise aus Kupfer oder einer geeigneten Kupferlegierung hergestellt, welche derart weich ausgewählt ist, dass das Fahnenelement bei bereits erfolgter Befestigung des ersten Batteriepols 11 an einer Batteriezelle manuell oder automatisiert in eine Richtung in einem Winkel von 180° zur in der Figur 2 dargestellten Position biegbar ist.

In alternativer Ausgestaltung ist der erste Batteriepol 11 mit dem Fahnenelement 12 nicht als ein L-Winkel wie in Figur 2 ausgeführt, sondern als ein T-Winkel, sodass sich das Fahnenelement 12 nicht nur in Richtung des zweiten Batteriepols 21 erstreckt, sondern auch in die entgegengesetzte Richtung.

In dieser Ausgestaltung kann somit der am Minuspol angeordnete erste Batteriepol 11 wie in Figur 3 dargestellt zu jeder Seite der ersten Batteriezelle 10 herausragen. Aus Figur 3 ist ersichtlich, dass an jeder der beiden dargestellten ersten Batteriezellen 10 im unteren Bereich der elektrische Kontakt zu einer zweiten Batteriezelle 20, deren Batteriepol 21 in Figur 3 angedeutet ist, herstellbar ist.

Das Fahnenelement 12 kann außerdem derart ausgestaltet sein, dass es an der in Figur 2 angedeuteten Stelle eine Abflachung 13 zur Vereinfachung der Anbringung einer Spannungsüberwachungseinheit aufweist. Erfindungsgemäss weisen die beiden Batteriepole 11 und 21 insbesondere im Bereich des Fahnenelementes 12 sowie im Kontaktierungsbereich 40 eine nicht dargestellte Isolierung auf, wobei die Isolierung nach Montage der Batteriepole an die jeweilige Batteriezelle angebracht wird, bis auf ein Fenster im Kontaktbereich 40, sodass die beiden Batteriepole 11 und 21 miteinander elektrisch leitfähig kontaktierend verbunden werden können und anschließend das Fenster der Isolierung mit einem weiteren passenden Isolationsmittel verschlossen wird, sodass die gesamte Oberfläche der aus den Batteriezellen herausragenden Batteriepole 11 und 21 von der Umgebung elektrisch isoliert ist.

## Patentansprüche

1. Verfahren zur Verbindung eines Batteriepols an einer ersten Batteriezelle(11) mit einem Batteriepol an einer zweiten Batteriezelle (21), bei dem der Batteriepol an der ersten Batteriezelle (11) mit dem Batteriepol an der zweiten Batteriezelle (21) derart verbunden wird, dass ein elektrisch leitfähiger Kontakt zwischen den beiden Batteriepolen besteht, wobei der Batteriepol an der ersten Zelle (11) mit dem Batteriepol an der zweiten Batteriezelle (21) unmittelbar kontaktiert wird, wobei die miteinander verbundenen Batteriepole (11), (21), soweit sie aus der Batteriezelle (10), (20) herausragen, eine elektrisch isolierende Ummantelung aufweisen, **dadurch gekennzeichnet, dass** ein Abschnitt der isolierenden Ummantelung im Bereich der unmittelbaren Kontaktierung (40) der Batteriepole (11), (21) vor Durchführung des Kontaktierungsprozesses von den Batteriepolen (11), (21) abgetrennt wird und nach erfolgtem Kontaktierungsprozess wieder an den Batteriepolen (11), (21) fixiert wird.

2. Verfahren zur Verbindung eines Batteriepols an einer ersten Batteriezelle (10) mit einem Batteriepol an einer zweiten Batteriezelle (11) nach Anspruch 1, **dadurch gekennzeichnet, dass** die Batteriepole (11), (21) zur Herstellung des elektrisch leitfähigen Kontaktes stoffschlüssig miteinander verbunden werden.

3. Verfahren zur Verbindung eines Batteriepols an einer ersten Batteriezelle mit einem Batteriepol an einer zweiten Batteriezelle nach Anspruch 1, **dadurch gekennzeichnet, dass** die Batteriepole (11), (21) zur Herstellung des elektrisch leitfähigen Kontaktes kraft- und formschlüssig miteinander verbunden werden.

4. Batterie (1), welche mindestens zwei elektrisch leitfähig miteinander verbundene Batteriezellen (10), (20) umfasst, wobei die beiden Batteriezellen (10), (20) jeweils einen Batteriepol (11), (21) aufweisen und ein Batteriepol an der ersten Batteriezelle (11) mit einem Batteriepol an der zweiten Batteriezelle (21) unmittelbar elektrisch leitfähig kontaktierend verbunden ist, wobei die miteinander verbundenen Batteriepole (11), (21), soweit sie aus der Batteriezelle (10), (20) herausragen, eine elektrisch isolierende Ummantelung aufweisen, **dadurch gekennzeichnet, dass** die isolierende Ummantelung im Bereich der unmittelbaren Kontaktierung (40) der Batteriepole (11), (21) einen vor Durchführung des Kontaktierungsprozesses von den Batteriepolen (11), (21) abtrennbaren und nach erfolgtem Kontaktierungsprozess wieder an den Batteriepolen (11), (21) fixierbaren Abschnitt umfasst.

5. Batterie nach Anspruch 4, **dadurch gekennzeichnet, dass** wenigstens einer der Batteriepole (11), (21) wenigstens ein Fahnenelement (12) umfasst, dessen Endbereich mit dem anderen Batteriepol (11), (21) unmittelbar verbunden ist.

6. Batterie nach Anspruch 5, **dadurch gekennzeichnet, dass** das Fahnenelement (12) Bestandteil eines aus Kupfer oder einer Kupferlegierung bestehenden Batteriepols (11), (21) ist.

7. Batterie nach wenigstens einem der Ansprüche 4 bis 6, **dadurch gekennzeichnet, dass** an wenigstens einem der Batteriepole (11), (21) ein Gewinde (50) zwecks Aufnahme einer Mutter (60) zur Erzielung einer Druckkraft auf ein Zellengehäuse angeordnet ist.

8. Batteriesystem, umfassend eine Mehrzahl von Batterien (1), die jeweils mindestens eine Batteriezelle (10), (20) aufweisen, wobei jeweils wenigstens eine der Batteriezellen (10), (20) je Batterie (1) wenigstens einen Batteriepol aufweist und ein Batteriepol einer ersten Batterie (11)mit einem Batteriepol einer zweiten Batterie (21) unmittelbar elektrisch leitfähig kontaktierend verbunden ist, wobei die miteinander verbundenen Batteriepole (11), (21), soweit sie aus der Batteriezelle (10), (20) herausragen, eine elektrisch isolierende Ummantelung aufweisen, **dadurch gekennzeichnet, dass** die isolierende Ummantelung im Bereich der unmittelbaren Kontaktierung (40) der Batteriepole (11), (21) einen vor Durchführung des Kontaktierungsprozesses von den Batteriepolen (11), (21) abtrennbaren und nach erfolgtem Kontaktierungsprozess wieder an den Batteriepolen (11), (21) fixierbaren Abschnitt umfasst.

## Claims

1. Method for connecting a battery pole on a first battery cell (10) to a battery pole on a second battery cell (20), in which the battery pole on the first battery cell (10) is connected to the battery pole on the second battery cell (20) in such a way that there is electrically conductive contact between the two battery poles, wherein the battery pole on the second battery cell (20) makes direct contact with the battery pole on the first battery cell (10), wherein the battery poles (11), (21) which are connected to one another, in as much as they project out of the battery cell (10), (20), have an electrically insulating casing, **characterized in that** a section of the insulating casing in the region of the direct contact-connection (40) of the battery poles (11), (21) is removed from the battery poles (11), (21) before the contact-making process is carried out and is fixed to the battery poles (11), (21) again once the contact-making process is complete.

2. Method for connecting a battery pole on a first battery cell (10) to a battery pole on a second battery cell (20) according to Claim 1, **characterized in that** the battery poles (11), (21) are connected to one another in a cohesive manner for the purpose of establishing the electrically conductive contact.

3. Method for connecting a battery pole on a first battery cell to a battery pole on a second battery cell according to Claim 1, **characterized in that** the battery poles (11), (21) are connected to one another in a force-fitting and interlocking manner for the purpose of establishing the electrically conductive contact.

4. Battery (1) which comprises at least two battery cells (10), (20) which are connected to one another in an electrically conductive manner, wherein the two battery cells (10), (20) each have a battery pole (11), (21), and a battery pole on the first battery cell (10) is connected to a battery pole on the second battery cell (20) such that electrically conductive contact is directly made, wherein the battery poles (11), (21) which are connected to one another, in as much as they project out of the battery cell (10), (20), have an electrically insulating casing, **characterized in that** the insulating casing in the region of the direct contact-connection (40) of the battery poles (11), (21) comprises a section which can be removed from the battery poles (11), (21) before the contact-making process is carried out and can be fixed to the battery poles (11), (21) again once the contact-making process is complete.

5. Battery according to Claim 4, **characterized in that** at least one of the battery poles (11), (21) comprises at least one plug element (12), of which the end region is directly connected to the other battery pole (11), (21).

6. Battery according to Claim 5, **characterized in that** the plug element (12) is a constituent part of a battery pole (11), (21) which is composed of copper or a copper alloy.

7. Battery according to at least one of Claims 4 to 6, **characterized in that** a thread (50) for the purpose of receiving a nut (60) for producing a pressure force on a cell housing is arranged on at least one of the battery poles (11), (21).

8. Battery system comprising a plurality of batteries (1) which each have at least one battery cell (10), (20), wherein in each case at least one of the battery cells (10), (20) for each battery (1) has at least one battery pole, and a battery pole of a first battery cell (10) is connected to a battery pole of a second battery cell (20) such that electrically conductive contact is directly made, wherein the battery poles (11), (21) which are connected to one another, in as much as they project out of the battery cell (10), (20), have an electrically insulating casing, **characterized in that** the insulating casing in the region of the direct contact-connection (40) of the battery poles (11), (21) comprises a section which can be removed from the battery poles (11), (21) before the contact-making process is carried out and can be fixed to the battery poles (11), (21) again once the contact-making process is complete.

## Revendications

1. Procédé pour relier une borne de batterie sur une première cellule de batterie (10) avec une borne de batterie sur une deuxième cellule de batterie (20), selon lequel la borne de batterie sur la première cellule de batterie (10) est reliée avec la borne de batterie sur la deuxième cellule de batterie (20) de telle sorte qu'il s'établit un contact électriquement conducteur entre les deux bornes de batterie, la borne de batterie sur la première cellule de batterie (10) étant mise en contact direct avec la borne de batterie sur la deuxième cellule de batterie (20), les bornes de batterie (11), (21) reliées ensemble, dans la mesure où elles font saillie hors de la cellule de batterie (10), (20), présentant un gainage électriquement isolant, **caractérisé en ce qu'**une portion du gainage isolant est détachée dans la zone de la mise en contact direct (40) des bornes de batterie (11), (21) avant d'effectuer le processus de mise en contact des bornes de batterie (11), (21), puis de nouveau fixée aux bornes de batterie (11), (21) après avoir accompli le processus de mise en contact.

2. Procédé pour relier une borne de batterie sur une première cellule de batterie (10) avec une borne de batterie sur une deuxième cellule de batterie (20) selon la revendication 1, **caractérisé en ce que** les bornes de batterie (11), (21) sont reliées ensemble par liaison de matière pour établir le contact électriquement conducteur.

3. Procédé pour relier une borne de batterie sur une première cellule de batterie avec une borne de batterie sur une deuxième cellule de batterie selon la revendication 1, **caractérisé en ce que** les bornes de batterie (11), (21) sont reliées ensemble par adhérence et par complémentarité de formes pour établir le contact électriquement conducteur.

4. Batterie (1), laquelle comprend au moins deux cellules de batterie (10), (20) reliées de manière électriquement conductrices entre elles, les deux cellules de batterie (10), (20) présentant respectivement une borne de batterie (11), (21) et une borne de batterie sur la première cellule de batterie (10) étant mis en contact électriquement conducteur direct avec une borne de batterie sur la deuxième cellule de batterie (20), les borne de batterie (11), (21) reliées ensemble, dans la mesure où elles font saillie hors de la cellule de batterie (10), (20), présentant un gainage électriquement isolant, **caractérisée en ce que** le gainage isolant comprend dans la zone de la mise en contact direct (40) des bornes de batterie (11), (21) une portion qui peut être détachée avant d'effectuer le processus de mise en contact des bornes de batterie (11), (21), puis de nouveau fixée aux bornes de batterie (11), (21) après avoir accompli le processus de mise en contact.

5. Batterie selon la revendication 4, **caractérisée en ce qu'**au moins l'une des bornes de batterie (11), (21) comprend au moins un élément languette (12) dont la zone d'extrémité est reliée directement avec l'autre borne de batterie (11), (21).

6. Batterie selon la revendication 5, **caractérisée en ce que** l'élément languette (12) fait partie d'une borne de batterie (11), (21) composée de cuivre ou d'un alliage de cuivre.

7. Batterie selon au moins l'une des revendications 4 à 6, **caractérisée en ce que** sur au moins l'une des bornes de batterie (11), (21) est disposé un filet (50) en vue d'accueillir un écrou (60) afin de parvenir à une force de compression sur un boîtier de cellule.

8. Système de batterie, comprenant une pluralité de batteries (1), lesquelles comprennent respectivement au moins une cellule de batterie (10), (20), au moins l'une des cellules de batterie (10), (20) de chaque batterie (1) présentant respectivement au moins une borne de batterie et une borne de batterie d'une première cellule de batterie (10) étant mis en contact électriquement conducteur direct avec une borne de batterie d'une deuxième cellule de batterie (20), les bornes de batterie (11), (21) reliées ensemble, dans la mesure où elles font saillie hors de la cellule de batterie (10), (20), présentant un gainage électriquement isolant, **caractérisé en ce que** le gainage isolant comprend dans la zone de la mise en contact direct (40) des bornes de batterie (11), (21) une portion qui peut être détachée avant d'effectuer le processus de mise en contact des bornes de batterie (11), (21), puis de nouveau fixée aux bornes de batterie (11), (21) après avoir accompli le processus de mise en contact.
